# EUROPÄISCHE PATENTSCHRIFT

(11) **EP 1 164 842 B1**
(45) Veröffentlichungstag und Bekanntmachung des Hinweises auf die Patenterteilung: **18.02.2004**
(21) Anmeldenummer: 00909356.8
(22) Anmeldetag: 13.03.2000
(51) Int. Cl.: A01N 25/02

(54) **FLÜSSIGE ZUBEREITUNGEN UND TENSID/LÖSUNGSMITTEL-SYSTEME**
LIQUID FORMULATIONS AND TENSIDE/SOLVENT SYSTEMS
PREPARATIONS LIQUIDES ET SYSTEMES TENSIONACTIF/SOLVANT

(30) Priorität: 23.03.1999 DE 19913036
(43) Veröffentlichungstag der Anmeldung: 02.01.2002
(73) Patentinhaber: Bayer CropScience GmbH, 65929 Frankfurt/Main (DE)
(72) Erfinder: WÜRTZ, Jochen, D-55411 Bingen am Rhein (DE); MAIER, Thomas, D-65719 Hofheim (DE); SCHNABEL, Gerhard, D-63820 Elsenfeld (DE); JOHANN, Gerhard, D-65510 Idstein (DE)
(86) Internationale Anmeldenummer: PCT/EP2000/002207
(87) Internationale Veröffentlichungsnummer: WO 2000/056146

(56) Entgegenhaltungen:
- WO-A-91/06215
- FR-A- 2 599 593

## Beschreibung

Die Erfindung betrifft das Gebiet der Kombinationen aus Tensiden und Lösungsmitteln (Tensid-Lösungsmittel-Systeme) für flüssige Zubereitungen (auch Formulierungen genannt). Die Erfindung betrifft dabei bevorzugt Tensid-Lösungsmittel-Systeme für Einphasen-Formulierungen von einem oder mehreren pestiziden Wirkstoffen, wobei keiner der Wirkstoffe in Wasser gut löslich ist, vorzugsweise jeder Wirkstoff eine Löslichkeit von 5 Gramm pro Liter (g/l) oder weniger als 5 g/l in Wasser besitzt. Insbesondere betrifft die Erfindung Emulsionskonzentrate (engl. : "emulsifyable concentrates", EC) auf Basis organischer Lösungsmittel und pestizider, z. B. herbizider Wirkstoffe unterschiedlicher Polarität, speziell emulgierbare Konzentrate, die einen oder mehrere Wirkstoffe aus der Gruppe Desmedipham, Phenmedipham, Ethofumesat und Herbizide physikalisch-anwendungstechnisch ähnlichen Typs, beispielsweise der Herbizide aus der Reihe der Phenoxyphenoxypropionate oder der Heteroaryloxyphenoxypropionate, enthalten.

Im allgemeinen werden Wirkstoffe nicht als Reinstoffe, sondern je nach Anwendungsgebiet und gewünschter physikalischer Beschaffenheit der Anwendungsform in Kombination mit bestimmten Hilfsstoffen eingesetzt, d. h. sie werden "formuliert". Häufig enthalten derartige Formulierungen anstelle von Einzelwirkstoffen Kombinationen verschiedener Wirkstoffe, um die Eigenschaften der Einzelwirkstoffe bei der Anwendung gemeinsam zu nutzen oder auch weil die Einzelwirkstoffe in der Kombination synergistisch sind, d. h. überadditive Wirkungssteigerungen ergeben.

Unabhängig vom Formulierungstyp sowie davon, ob die Formulierungen einen oder mehrere Wirkstoffe enthalten, ist man insbesondere im landwirtschaftlichen Bereich bestrebt, eine möglichst hohe Wirkstoffkonzentration ("Beladung") der jeweiligen Formulierung zu erreichen, da eine hohe Konzentration der Wirkstoffe eine Reduktion der auszubringenden Volumina ermöglicht und folglich Materialeinsparungen im Bereich der ausgebrachten Hilfsstoffe, sowie Einsparungen im Verpackungs- und Logistik-Bereich nach sich zieht.
Daher sind hochkonzentrierte stabile Formulierungen und Coformulierungen mit umweltfreundlichen Hilfsstoffen von grundsätzlichem Interesse.

Prinzipiell können Wirkstoffe auf unterschiedliche Art formuliert werden, je nachdem welche biologischen und/oder chemisch-physikalischen Parameter vorgegeben sind. Allgemein kommen als Formulierungsmöglichkeiten dafür beispielsweise in Betracht: Spritzpulver (WP), Öl-in-Wasser- bzw. Wasser-in-Öl-Emulsionen (EW bzw. EO), Suspensionen (SC), Suspoemulsionen (SE), emulgierbare Konzentrate (EC) oder auch Granulate zur Boden- oder Streuapplikation bzw. wasserdispergierbare Granulate (WG). Die genannten Formulierungstypen sind im Prinzip bekannt und werden z. B. beschrieben in: Winnacker-Küchler, "Chemische Technologie", Band 7, C.Hauser-Verlag, München, 4.Auflage 1986; van Valkenburg, "Pesticide Formulations", Marcel-Dekker N.Y., 1973; K.Martens, "Spray Drying Handbook", 3rd Ed., 1979, G.Goodwin Ltd. London.

Handelt es sich bei den zu formulierenden Wirkstoffen um solche geringer Polarität, z. B. nicht salzartige oder überwiegend hydrophobe Reste enthaltende und daher in Wasser kaum lösliche Verbindungen, sind die Formulierungsmöglichkeiten naturgemäß eingeschränkt. Dies trifft beispielsweise auf herbizide Wirkstoffe wie Desmedipham (DMP) und Phenmedipham (PMP) zu, die der Gruppe der Biscarbamate angehören und deren Wasserlöslichkeit 7 mg/l bzw. 4,7 mg/l beträgt. Ähnlich verhält es sich mit herbiziden Wirkstoffen aus der Gruppe der Sulfonate wie beispielsweise Ethofumesat (Wasserlöslichkeit: 50 mg/l) oder Benfuresat (Wasserlöslichkeit: 261 mg/l).

Flüssigformulierungen von Herbiziden der vorstehend aufgeführten Art sind bereits bekannt. So werden beispielsweise in WO-A-85101286 Flüssigformulierungen beschrieben, die PMP und/oder Metamitron enthalten. Als Lösungsmittel werden in diesem Zusammenhang Ester von Polyalkoholen, Ether, Ketone, in Wasser unlösliche Alkohole, (Poly-)Glykole und Öle pflanzlichen, aber auch mineralischen Ursprungs erwähnt, und als geeignete Emulgatoren werden nur allgemein nichtionogene, aber auch ampholytische, kationische oder anionische Tenside für die beschriebenen Flüssigformulierungen genannt.

Alternativ zu Emulsionskonzentraten auf Lösungsmittelbasis kommen für die oben genannten Wirkstoffe unter anderem Wasser enthaltende Suspensionskonzentrate (SC) bzw. Suspoemulsionen (SE) in Betracht. Derartige Formulierungen sind in WO-A-95/23505, EP-A-0637910 und WO-A-92/09195 beschrieben.

Im Unterschied zu den thermodynamisch stabilen Emulsionskonzentraten, die sich durch Ihre theoretisch unbegrenzte Lagerstabilität auszeichnen, sind Suspensionen - wie Makroemulsionen auch - nur kinetisch stabil, d. h. nach einer individuell unterschiedlich langen Zeit ist bei letzteren mit Phasentrennung und damit einem "Zerfall" der Formulierung zu rechnen. Weiterhin weisen Suspensionen gegenüber Emulsionskonzentraten den Nachteil auf, daß im Konzentrat nur ein Teil, in der Regel nur ein kleiner Teil des eingesetzten Wirkstoffs oder Wirkstoffgemischs in gelöster Form vorliegt. Beim Verdünnen der Suspension mit Wasser zur Herstellung der Spritzbrühe wird ein Auflösen der im Konzentrat ungelösten Anteile meist nicht oder nicht vollständig erreicht, d. h. die Spritzbrühe bleibt weiterhin eine Suspension. Wie zahlreiche biologische Versuche gezeigt haben, insbesondere auch im Falle der Wirkstoffe DMP, PMP und Ethofumesat, ist es jedoch meist von Vorteil, wenn die Wirkstoffe auch in der Spritzbrühe so weit wie möglich im gelösten Zustand vorliegen: Die Effizienz der Formulierung ist demnach umso besser, je feiner die Wirkstoffe in der Spritzbrühe dispergiert sind.

Zudem ergeben sich bei einer sehr feinen Verteilung der Wirkstoffe in der Spritzbrühe applikationstechnische Vorteile, z. B. verminderte Verstopfungsgefahr für die Spritzdüsen, verminderter Reinigungsaufwand etc.

Darüberhinaus sind Emulsionskonzentrate - im Gegensatz zu Suspensionen, die eine Vermahlung des Wirkstoffs oder der Wirkstoffe voraussetzen-vorteilhafterweise mit sehr kleinem Energieeintrag und technisch einfachen Rührwerkzeugen herstellbar, d.h. bereits bei der Fertigung ergeben sich gegenüber letzteren Vorteile durch Energiekostenersparnis

Um auch in der Spritzbrühe einen möglichst großen Teil an Wirkstoff(en) in Lösung zu halten, stellt sich daher im vorliegenden Fall die Aufgabe, flüssige Zubereitungen mit in Wasser unlöslichen Lösungsmitteln zu finden, deren Polarität hohe Konzentrationen der Wirkstoffe ermöglicht. Eine Korrelation zwischen der Polarität des Lösungsmittels und der Polarität des oder der Wirkstoffe, mit deren Hilfe sich geeignete Lösungsmittel für bestimmte Wirkstoffe voraussagen ließen, existiert jedoch nicht. Die Beantwortung der Frage, ob sich im Einzelfall geeignete derartige Lösungsmittel finden lassen oder nicht, erfordert oft aufwendig viele Versuche und bleibt selbst dann manchmal offen.

In FR-A-2597720, FR-A-2599593 sowie in BE-A-904874 sind bereits Emulsionskonzentrate (ECs) beschrieben, die - in Abweichung von den oben zitierten Schriften - in Verbindung mit (mindestens) einem Herbizid vom Biscarbamat-Typ (also insbesondere PMP oder DMP) eine Lösungsmittelkombination aus Tributylphosphat und einem mit Wasser mischbaren Lösungsmittel wie insbesondere N-Methylpyrrolidon (NMP) enthalten. WO 91/06215 beschreibt ECs für herbizide (Hetero)Aryloxyphenoxypropionate in Kombination mit Safenern wie Fenchlorazol, wobei Carbonsäureester oder Phosphorsäureester als stabilisierendes Agens enthalten sind. Im Beispiel 2 wird Tributylphosphat in Kombination mit Dodecylsulfonat-CA erwähnt. Weiterhin beschreibt EP-A-0328217 emulgierbare Konzentrate, die Ethofumesat und als Lösungsmittel Tributylphosphat enthalten. Nachteilig bei letzterem Formulierungtyp ist die Verwendung von Tributylphosphat, weil es als gefährliche Chemikalie gilt (vgl. z. B. Chemikaliengesetz). Dadurch ist zwar die Verwendung von Tributylphosphat nicht unmöglich oder verboten, jedoch ist die Verwendung in der Regel mit Auflagen verbunden oder generell problematisiert.

Neben der rein formulierungstechnischen Aufgabe, eine stabile konzentrierte flüssige Formulierung bereitzustellen, welche bei Verdünnung mit Wasser Spritzbrühen mit physikalisch-anwendungstechnisch günstigen Eigenschaften ergibt, stellt sich vorzugsweise zusätzlich die Aufgabe, flüssige Formulierungen mit biologisch günstigen Eigenschaften bereitzustellen. Die für die flüssigen Formulierungen einzusetzenden Hilfsmittel sollten deshalb hinsichtlich der biologischen Eigenschaften breit einsetzbar sein und die Eigenschaften der verwendeten Wirkstoffe unterstützen bzw. möglichst nicht nachteilig beeinflussen.

Weiterhin ist bekannt, daß die biologische Aktivität mancher pestizider Wirkstoffe in einigen Fällen durch niedermolekulare organische Verbindungen gesteigert werden kann. So eignen sich gemäß BE-A-597284 Ester oder Teilester auf Basis der Orthophosphorsäure und Alkoholen auf Alkyl-, Aryl-, Alkylaryl-, Cycloalkyl- und/oder Heterocyclen-Basis zur Wirkungsverstärkung von Herbiziden, beispielsweise von herbiziden Phenylharnstoffderivaten wie Monuron, Azolen wie Amitrol, Triazinen wie Simazin und Propionsäurederivaten wie Dalapon. Die dabei als Hilfsmittel spezifisch beschriebenen Phosphorsäureester umfassen lediglich relativ unpolare oder ganz wasserlösliche Phosphorsäureester, die für die Herstellung von Emulsionskonzentraten nicht besonders geeignet sind. Zudem sind in dieser Schrift die im Rahmen der Aufgabenstellung bevorzugten Wirkstoffe wie Biscarbamate (Phen- und Desmedipham) oder Sulfonate (Ethofumesat) nicht erwähnt.

In DE-A-2914164 sind synergistische Wirkungen beschrieben, die bei Herbiziden mit desikkativer Wirkung an Kulturpflanzen, d. h. beispielsweise Herbiziden aus der Gruppe der Phenylharnstoffe (z. B. Metoxuron, Diuron) oder der Triazine (z. B. Atrazin, Simazin), auftreten, wenn sie mit Lösungsmitteln kombiniert werden, wie sie in der metallurgischen Industrie bei der Metallgewinnung oder als Weichmacher für Polymere eingesetzt werden. Aus der Druckschrift geht nicht hervor, welche der allgemein genannten Lösungsmittel für die Herstellung von Emulsionskonzentraten und daraus herstellbarer flüssiger Zubereitungen geeignet sind.

Überraschenderweise wurde nun gefunden, daß bestimmte Tensid-Lösungsmittel-Systeme in besonderer Weise geeignet sind, für die Herstellung emulgierbarer Konzentrate und entsprechender davon abgeleiteter flüssiger Zubereitungen wie wäßrigen Spritzbrühen eingesetzt zu werden.

Gegenstand der Erfindung sind Tensid-lösungsmittel-Systeme für flüssige organische Formulierungen (Zubereitungen), dadurch gekennzeichnet, daß sie
b1) ein oder mehrere Tenside auf Aromatenbasis und
b2) einen oder mehrere vollständig verestere organische Phosphate und/oder Phosphonate als Lösungsmittel, ausgewählt aus der Gruppe bestehend aus
   b2.1) Estern der Phosphorsäure mit Alkoholen aus der Gruppe bestehend aus
      - einwertigen Alkanolen mit 5 bis 22 C-Atomen,
      - Diolen oder Polyolen,
      - Aryl-, Alkylaryl-, Poly(alkyl)aryl- oder Poly(arylalkyl)arylalkoholen,
      - alkoxylierten Alkoholen, die durch Umsetzung der vorstehend genannten Alkohole mit Alkylenoxiden erhalten werden, oder
      - alkoxylierten Alkoholen, die durch Umsetzung einwertiger Alkanole mit 1 bis 4 C-Atomen und Alkylenoxiden erhalten werden, und
   b2.2) Phosphonaten auf Basis von zweifach mit Alkoholen und/oder alkoxylierten Alkoholen veresterten Alkyl-, Aryl-, Alkylaryl-, Poly(alkyl)aryl- oder Poly(arylalkyl)-aryl-Phosphonsäuren mit Alkoholen aus der Gruppe
      - einwertige Alkanole mit 1 bis 22 C-Atomen,
      - Diole oder Polyole,
      - Aryl-, Alkylaryl-, Poly(alkyl)aryl-und Poly(arylalky)arylalkoholen oder
      - alkoxylierte Alkoholen, die durch Umsetzung der vorstehend genannten Alkohole mit Alkylenoxiden erhalten werden,
wobei die drei Alkoholkomponenten des Phosphorsäureesters (b2.1) oder die zwei Alkoholkomponenten des Phosphonats (b2.2) gleich oder verschieden sein können und so ausgewählt sind, dass der Ester ein polares Lösungsmittel ist, das bei 20 °C wasserunlöslich oder bis zu 5 g/l, vorzugsweise bis 3 g/l, insbesondere bis 2 g/l, in Wasser löslich ist und in wäßriger Lösung keine mizellaren Aggregate ausbildet,
(= erfindungsgemäßes Tensid/Lösungsmittel-System) enthalten.

Gegenstand der Erfindung sind auch flüssige Formulierungen, insbesondere herbizide Formulierungen, welche
(a) einen oder mehrere in Wasser unlösliche Wirkstoffe,
(b) das erfindungsgemäße Tensid/Lösungsmittel-System (= Komponentenmischung (b)),
(c) gegebenenfalls weitere organische Lösungsmittel,
(d) gegebenenfalls weitere Tenside und/oder Polymere und
(e) gegebenenfalls Wasser enthalten.

Erfindungsgemäß einsetzbare Tenside auf Aromatenbasis sind beispielsweise oberflächenaktive mit einer oder mehreren Alkylgruppen substituierte und nachfolgend derivatisierte Benzole oder Phenole, welche in der Lösungsmittelphase löslich sind und diese - zusammen mit den darin gelösten Wirkstoffen - bei Verdünnung mit Wasser (zur Spritzbrühe) emulgieren.

Beispiele für derartige Tenside sind:
b1.1) Phenole, Phenyl-(C₁-C₄)alkyl-ether oder (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 1 bis 4 C-Atome aufweist, vorzugsweise mit 3 bis 10 mol Alkylenoxid umgesetztes Phenol,
b1.2) (Poly)alkylphenole oder (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol,
b1.3) Polyarylphenole oder Polyarylphenolalkoxylate [= Polyarylphenol-(poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol,
b1.4) Verbindungen, die formal die Umsetzungsprodukte der unter b1.1) bis b1.3) beschriebenen Moleküle mit Schwefelsäure oder Phosphorsäure darstellen und deren mit geeigneten Basen neutralisierte Salze, beispielsweise der saure Phosphorsäureester des dreifach ethoxylierten Phenols, der saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol sowie
b1.5) saure und mit geeigneten Basen neutralisierte (Poly)alkyl- und (Poly)arylbenzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öl-lösliche Salze wie beispielsweise das Isopropylammoniumsalz der Dodecylbenzolsulfonsäure.

Bei den Alkylenoxy-einheiten sind Ethylenoxy-, Propylenoxy- und Butylenoxy-einheiten, insbesondere Ethylenoxyeinheiten bevorzugt.

Bevorzugte Tenside aus der Gruppe der Tenside auf Aromatenbasis sind insbesondere beispielsweise
mit 4 bis 10 mol Ethylenoxid umgesetztes Phenol, kommerziell beispielsweise in Form der Agrisol®-Marken (Akcros) erhältlich,
mit 4 bis 50 mol Ethylenoxid umgesetztes Triisobutylphenol, kommerziell beispielsweise in Form der Sapogenat T®-Marken (Clariant) erhältlich,
mit 4 bis 50 mol Ethylenoxid umgesetztes Nonylphenol, kommerziell beispielsweise in Form der Arkopat®-Marken (Clariant) erhältlich,
mit 4 bis 150 mol Ethylenoxid umgesetztes Tristyrylphenol, beispielsweise Soprophor CY/8® (Rhodia) und
saures (lineares) Dodecylbenzolsulfonat, kommerziell beispielsweise in Form der Marlon®-Marken (Hüls) erhältlich.

Organische Phosphate bzw. Phosphonate [Komponente (b2)] im Sinne der Erfindung sind vollständig umgesetzte, nicht verseifte Ester der ortho-Phosphorsäure bzw. einer Alkyl-, Aryl-, Alkylaryl-, Poly(alkyl)-aryl- oder Poly(arylalkyl)-aryl-Phosphonsäure. Bevorzugt eignen sich dabei (möglichst) polare, zugleich aber weitgehend wasserunlösliche Verbindungen, die aufgrund ihrer Grenzflächenaktivität die Grenzflächenspannung der den Wirkstoff (a) oder die Wirkstoffe (a) enthaltenden Öltröpfchen in der Spritzbrühe gegenüber der äußeren wässrigen Phase so herabsetzen, daß sich im Verbund mit den in der Formulierung zusätzlich enthaltenen Tensiden/Emulgatoren eine applikationstechnisch einwandfreie stabile Verdünnung/Spritzbrühe ergibt. Besonders bevorzugt eignen sich Verbindungen der obengenannten Art, die vor oder nach der Veresterung mit der ortho-Phosphorsäure bzw. Phosphonsäure alkoxyliert wurden, insbesondere Tri(butoxyethy))phosphat (TBEP), das bei 20°C eine Wasserlöslichkeit von 1,1 g/l besitzt.

Die Verbindungen der Komponente (b2) haben das gemeinsame Merkmal, daß sie in wässriger Lösung keine - z.B. mit Lichtstreumessungen oder anderen Verfahren nachweisbaren - mizellaren Aggregate ausbilden. Dies grenzt sie von den Phosphorsäureestertensiden ab und rechtfertigt ihre Einstufung als Lösungsmittel.

Geeignete polare und zugleich weitgehend wasserunlösliche organische Phosphorsäureester sind die formal dreifach mit Alkoholen umgesetzten Ester der Orthophosphorsäure und die Oxalkylate der formal ein- und/oder zweifach mit Alkoholen umgesetzten Orthophophorsäure. Als Verbindungen eignen sich dabei beispielsweise:
b2.1) weitgehend wasserunlösliche polare Ester der Phosphorsäure mit Alkoholen aus der Gruppe enthaltend Phoshorsäureester mit
   - einwertigen Alkanolen mit 5 bis 22 C-Atomen, z.B. mit n-, i- oder neo-Pentanol, n-Hexanol, n-Octanol, 2-Ethylhexanol,
   - Diolen oder Polyolen, wie Ethylenglykol, Propylenglykol oder Glycerin,
   - Aryl-, Alkylaryl-, Poly(alkyl)aryl- und Poly(arylalkyl)arylalkoholen, beispielsweise mit Phenol, Kresol, Octylphenol, Nonylphenol, Triisobutylphenol und/oder Tristyrylphenol,
   - alkoxylierten Alkoholen, die durch Umsetzung der vorstehend genannten Alkohole mit Alkylenoxiden, vorzugsweise (C₁-C₄)Alkylenoxiden erhalten werden, und
   - alkoxylierten Alkoholen, die durch Umsetzung einwertiger Alkanole mit 1 bis 4 C-Atomen und Alkylenoxidenerhalten werden,
   wobei die 3 Alkoholkomponenten des Phosphorsäureesters gleich oder verschieden sein können und so ausgewählt sind, daß der Ester als weitgehend wasserunlösliches polares Lösungsmittel einsetzbar ist. Weiterhin geeignet sind
b2.2) weitgehend wasserunlösliche und zugleich polare Phosphonate auf Basis von zweifach mit Alkoholen und/oder alkoxylierten Alkoholen veresterten Alkyl-, Aryl-, Alkylaryl-, Poly(alkyl)-aryl- oder Poly(arylalkyl)-aryl-Phosphonsäuren, vorzugsweise Ester mit
   - einwertigen Alkanolen mit 1 bis 22 C-Atomen, z.B. mit z. B. n-Methanol, n-Ethanol, n- oder i-Propanol, n-, i- oder t-Butanol, n-, i-oder neo-Pentanol, n-Hexanol, n-Octanol, 2-Ethylhexanol, oder auch sec-Butanol,
   - Diolen oder Polyolen, wie Ethylenglykol, Propylenglykol oder Glycerin,
   - Aryl-, Alkylaryl-, Poly(alkyl)aryl- oder Poly(arylalkyl)arylalkoholen, beispielsweise mit Phenol, Kresol, Octylphenol, Nonylphenol, Triisobutylphenol und/oder Tristyryiphenol oder
   - alkoxylierten Alkoholen, die durch Umsetzung der vorstehend genannten Alkohole mit Alkylenoxiden, vorzugsweise (C₁-C₄)Alkylenoxiden, erhalten werden,
   als jeweiliger Alkoholkomponente, wobei die 2 Alkoholkomponenten des Phosphonsäureesters gleich oder verschieden sein können und so ausgewählt sind, daß der Ester als weitgehend wasserunlösliches polares Lösungsmittel einsetzbar ist.

Grundsätzlich sind bei den Alkylenoxy-einheiten (C₁-C₄)Alkylenoxid-Einheiten bevorzugt, z. B. Ethylenoxy-, Propylenoxy- und/oder Butylenoxy-einheiten, insbesondere Propylenoxy- und/oder Ethylenoxyeinheiten.
Die Alkoholkomponenten enthalten vorzugsweise 1-200, insbesondere 1-150, ganz besonders 1-100 Alkylenoxyeinheiten, vorzugsweise Ethylenoxyeinheiten,

Bevorzugte Phosporsäureester sind insbesondere beispielsweise
- mit alkoxylierten kurzkettigen Alkoholen mit 1 bis 22 C-Atomen im Alkylrest und 1 bis 30 Alkylenenoxy-einheiten im Polyalkylenoxy-teil dreifach veresterte ortho-Phosphorsäure, beispielsweise Tributoxyethytphosphat (Clariant),
- mit Alkylalkoholen mit 5 bis 22 C-Atomen dreifach veresterte ortho-Phosphorsäure, beispielsweise Hostaphat CG 120® (Clariant), Tri-n-Octylphosphat ("TOF", Bayer), sowie
- mit gegebenenfalls alkoxylierten Alkoholen mit 1 bis 22 C-Atomen im Alkylrest oder gegebenenfalls alkoxylierten Phenolderivaten, jeweils mit 0 bis 30 Alkylenoxy-einheiten im Polyalkylenoxy-teil teilweise veresterte ortho-Phosphorsäure, wobei die verbleibenden OH-Valenzen der ortho-Phosphorsäure nachfolgend alkoxyliert wurden (z.B. mit 1 bis 10 mol Alkylenoxid mit 1 bis 4 C-Atomen), beispielsweise das Reaktionsprodukt von Mono-/Dibutoxyethylphosphat und 2 mol Ethylenoxid bzw. 2 mol Propylenoxid (Clariant).

Bevorzugte Phosphonate sind insbesondere beispielsweise
- formal zweifach mit Alkoholen umgesetzte Ester der n-Octylphosphonsäure, beispielsweise die Hostarex-Typen® (Clariant).

Daneben enthalten die erfindungsgemäßen Formulierungen weitere Lösungsmittel, Tenside und/oder Polymere, ohne daß die genannten vorteilhaften Eigenschaften des Tensid-/Lösungsmittelsystems verlorengehen. Optional können so beispielsweise noch anionogene Tenside wie Alkylpolyglykolethercarboxylate in die Formulierungen eingearbeitet werden. Beispiele für derartige anionogene Tenside sind Akypo RLM 45® (Kao) bzw. Marlowet 4538® (Condea).

Ebenso lassen sich auch kationische oder andere nichtionogene Tenside in die erfindungsgemäßen Emulsionskonzentrate einarbeiten. Beispiele für kationogene Tenside sind Genamin C-200® (Clariant) bzw. Armoblen 557® (Akzo), als nichtionogene Tenside kommen beispielsweise Emulsogen EL 400® (Clariant), Serdox NOG 600® (Servo) oder auch tensidische Polymere auf Alkylenoxidbasis wie beispielsweise Ethylenoxid/Propylenoxid-Blockcopolymere (z.B. Genapol PF40® (Clariant)) in Frage.

Im Zusammenhang mit der vorliegenden Erfindung eignen sich als zusätzliche Lösungsmittel beispielsweise unpolare Lösungsmittel, polare protische oder aprotisch dipolare Lösungsmittel und deren Mischungen. Beispiele für Lösungsmittel im Sinne der Erfindung sind
- aliphatische oder aromatische Kohlenwasserstoffe, wie z.B. Mineralöle, Paraffine oder Toluol, Xylole und Naphthalinderivate, insbesondere 1-Methylnaphthalin, 2-Methylnaphthalin, 6-16C-Aromatengemische wie z.B. die Solvesso®-Reihe (ESSO) mit den Typen Solvesso® 100 (Kp. 162-177°C), Solvesso® 150 (Kp. 187-207°C) und Solvesso® 200 (Kp. 219-282 °C) und 6-20C-Aliphaten, die linear oder cyclisch sein können, wie die Produkte der Shellsol®-Reihe, Typen T und K oder BP-n Paraffine,
- halogenierte aliphatische oder aromatische Kohlenwasserstoffe wie Methylen-chlorid bzw. Chlorbenzol,
- Ester wie z.B. Triacetin (Essigsäuretriglycerid), Butyrolacton, Propylencarbonat, Triethylzitrat und Phthalsäure-(C₁-C₂₂)alkylester, speziell Phthalsäure(C₄-C₈)alkylester,
- Ether wie Diethylether, Tetrahydrofuran (THF), Dioxan, Alkylenglykolmonoalkyether und -dialkylether wie z.B. Propylenglykolmonomethylether, speziell Dowanol® PM (Propylenglykolmonomethylether), Propylen-glykolmonoethylether, Ethylenglykolmonomethylether oder - monoethylether, Diglyme und Tetraglyme,
- Amide wie Dimethylformamid (DMF), Dimethylacetamid, Dimethyicapryl/caprin-fettsäureamid und N-Alkylpyrrolidone,
- Ketone wie das wasserlösliche Aceton, aber auch mit Wasser nicht mischbare Ketone wie beispielsweise Cyclohexanon oder Isophoron,
- Nitrile wie Acetonitril, Propionitril, Butyronitril und Benzonitril,
- Sulfoxide und Sulfone wie Dimethylsulfoxid (DMSO) und Sulfolan sowie
- Öle im allgemeinen, z.B. auf pflanzlicher Basis wie Maiskeimöl und Rapsöl.

Häufig eignen sich auch Kombinationen verschiedener Lösungsmittel, die zusätzlich Alkohole wie Methanol, Ethanol, n- und i-Propanol, n-, i-, t- und 2-Butanol enthalten.

Bevorzugte zusätzliche organische Lösungsmittel im Sinne der vorliegenden Erfindung sind insbesondere Amide wie Dimethylcapryl-/caprinfettsäureamid und N-Methylpyrrolidon.

Mit den erfindungsgemäßen Tensid-/Lösungsmittelsystemen lassen sich nun überraschenderweise optisch transparente, thermodynamisch stabile und flüssige Emulsionskonzentrate unter anderem von Biscarbamat-(Desmedipham und/oder Phenmedipham) und/oder Sulfonat-Herbiziden (Ethofumesat) herstellen. Darüberhinaus beeinflußt das erfindungsgemäße Tensidsystem die pestizide Wirkung des/der eingearbeiteten Wirkstoffe in günstiger Weise.

Das erfindungsgemäße Tensid-/Lösungsmittelsystem gestattet auch die Herstellung von Emulsionskonzentraten mit anderen als den hier aufgeführten Wirkstoffen, sofern sie hinsichtlich ihrer Löslichkeiten ähnliche Eigenschaften aufweisen. Beispielsweise eignen sich auch Herbizide aus der Gruppe der Phenoxyphenoxypropionate wie Diclofop-methyl, Cyhalofop-butynyl, der Heteroaryloxyphenoxypropionate wie Fenoxaprop-ethyl, Fenoxaprop-P-ethyl, Fluazifop-butyl, Fluazifop-P-butyl, Haloxyfop-methyl, Haloxyfop-etotyl, Haloxyfop-P-methyl, Propquizofop, Quizalofop-ethyl, Quizalofop-P-ethyl oder Clodinafop-propargyl, aus der Gruppe der Triazinone wie Metamitron, Metribuzin oder Hexazinon, aus der Gruppe der Sulfonylharnstoffe wie Triflusulfuron-methyl, Amidosulfuron, lodosulfuron-methyl, Tribenuron-methyl, Triasulfuron, Thifensulfuron-methyl, Sulfosulfuron, Sulfometuron-methyl, Prosulfuron, Primisulfuron-methyl, Oxasulfuron, Metsulfuron-methyl, Ethoxysulfuron, Ethametsulfuron-methyl, Cyclosulfamuron, Cinosulfuron, Chlorsulfuron, Chlorimuron-ethyl oder Bensulfuron-methyl, vorzugsweise in Form der Nicht-Salze, aber auch wenig wasserlösliche Pyridylsulfonylharnstoffe, oder andere Herbizide wie Benfuresate, oder andere Wirkstoffe wie das Fungizid wie Prochloraz und/oder Insektizide wie Deltamethrin. Dies zeigt die Flexibilität des beschriebenen Tensid/Lösungsmittet-Systems auf. Die genannten Verbindungen sind aus "The Pesticide Manual", British Crop Protection Council, 11. Ausgabe, 1997 dem Fachmann bekannt.

Aus den genannten Gründen sind ein besonderer Gegenstand der Erfindung Tensid-/Lösungsmittelsysteme für flüssige herbizide Mittel, die
a) ein oder mehrere Biscarbamat-Herbizide der Formeln (a1) und (a2) 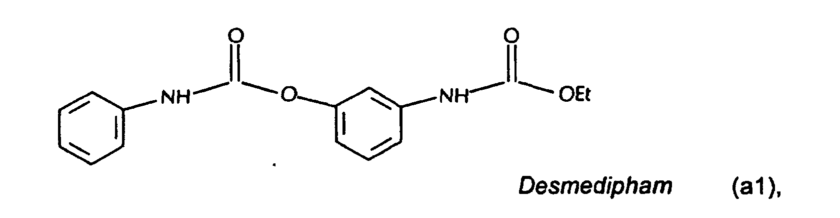 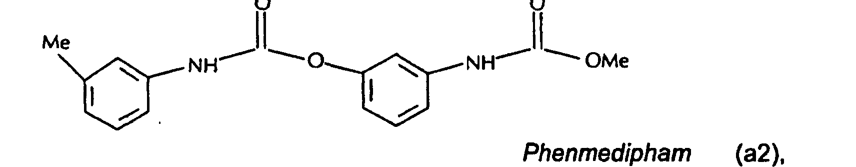 und/oder ein oder mehrere Herbizide vom Typ der Sulfonate, wie z.B. Ethofumesate (a3), 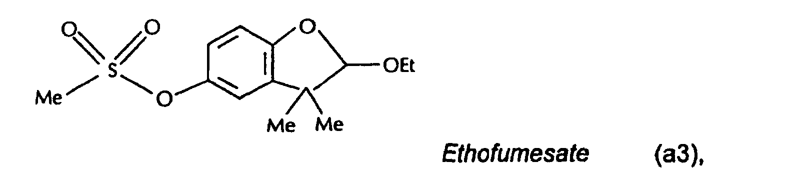
b) das erfindungsgemäße Tensid-/Lösungsmittelsystem (Komponentenmischung (b)),
c) gegebenenfalls weitere organische Lösungsmittel und
d) gegebenenfalls weitere Tenside und/oder Polymere enthalten.

Bei den Verbindungen der Formeln (a1) und (a2) handelt es sich um Derivate der Carbaminsäure. Die herbiziden Eigenschaften dieser Verbindungen sind z. B. in DE-A-3799758 beschrieben.
Die Verbindungen der Formel (a3) enthalten ein asymmetrisches C-Atom. Beide Enantiomere werden dabei als biologisch aktiv angesehen. Die Formel (a3) umfaßt daher alle Stereoisomeren und deren Gemische, insbesondere das Racemat. Ihre herbiziden Eigenschaften sind z.B. in GB-A-1271659 beschrieben.

Das erfindungsgemäße Tensid-/Lösungsmittelsystem (Komponentenmischung b)) ergibt bei Verdünnung mit Wasser Dispersionen von Ölphasen in Wasser bzw.- bei entsprechender Auswahl der Einzelkomponenten - von wäßrigen Phasen in Öl. Je nach Zusammensetzung sind damit folglich entweder mit Wasser oder mit Öl unter Erhalt der kolloidalen Struktur verdünnbare Dispersionen zugänglich. Daher sind die via Verdünnung aus den beschriebenen Konzentraten zugänglichen Dispersionen ein weiterer Gegenstand der Erfindung.
Die Gewichtsverhältnisse der kombinierten herbiziden Wirkstoffe vom Typ a) (Desmedipham(a1) : Phenmedipham(a2) : Ethofumesate(a3)) können innerhalb weiter Grenzen variieren und liegen in der Regel zwischen 1:1:1 und 1:10:100, im Falle reiner Biscarbamt-Mischungen (a1): (a2) zwischen 100:1 und 1:100. Für Mischungen mit allen drei herbiziden Wirkstoffen sind folgende Gewichtsverhältnisse (a1) : (a2) : (a3) besonders bevorzugt:
◆ (a1): (a2): (a3) wie 1:1:1 bis 1:2:3, insbesondere 1:1.2:1.4 bis 1:1.8:2.4 und
◆ (a1 ) :(a2) : (a3) wie 1:2:5 bis 1:5:10, insbesondere 1:2.5:5.5 bis 1:3.5:6.5.

In der Regel liegen die Aufwandmengen zwischen 400 und 2000 g a.i./ha, vorzugsweise zwischen 600 und 1500 g a.i./ha. Bei gleicher Herbizidwirkung liegt die Aufwandmenge bei der kombinierten Anwendung aller drei Herbizide (a1)-(a3) wesentlich unterhalb der Aufwandmengen für die Applikation von Kombinationen oder Einzelapplikationen der Biscarbamat-Herbizide vom Typ (a1) und (a2): So liegt die Aufwandmenge im Falle von reinen Biscarbamat-Mischungen (a1): a2) zwischen 600 und 1300 g a.i./ha, im Falle von Dreier-Mischungen a1): a2): a3) beträgt sie zwischen 400 und 1000 g a.i./ha. Daher sind thermodynamisch stabile Formulierungen, in denen alle drei Wirkstoffe enthalten sind, aufgrund ihrer hohen biologischen Wirksamkeit - bei insgesamt reduziertem Wirkstoffgehalt - von besonderem Interesse. Allerdings ist die optimale Wahl der Gewichtsverhältnisse und der Aufwandmengen abhängig vom Entwicklungsstadium der jeweiligen Unkräuter oder Ungräser, der vorherrschenden Unkrautspektren, Umweltfaktoren und Klimabedingungen, so daß die oben angegebenen Gewichtsverhältnisse und Aufwandmengen im Einzelfall zu überprüfen sind.

Die zur Herstellung der genannten Formulierungen notwendigen Hilfsmittel wie insbesondere Tenside und Lösungsmittel sind im Prinzip bekannt und werden beispielsweise beschrieben in: McCutcheon's "Detergents and Emulsifiers Annual", MC Publ. Corp., Ridgewood N.J.; Sisley and Wood, "Encyclopedia of Surface active Agents", Chem. Publ.Co.Inc., N.Y. 1964; Schönfeldt, "Grenzflächenaktive Äthylenoxidaddukte", Wiss. Verlagsgesellschaft, Stuttgart 1976; Winnacker-Küchler, "Chemische Technologie", Band 7, C.Hauser-Verlag, München, 4.Auflage 1986.

Während der chemische "Aufbau" der einzelnen einsetzbaren Komponenten dort hinreichend beschrieben ist, sind Vorhersagen bezüglich der Eigenschaften von Mischungen derartiger Komponenten für die Formulierung eines bestimmten Wirkstoffsystems aus den genannten Handbüchem in der Regel nicht ableitbar. Verwendet man z.B. eine Tensid/Lösungsmittelkombination, mit der sich für Wirkstoffkombinationen aus Desmedipham und/oder Phenmedipham und/oder Ethofumesat bei relativ niedriger "Wirkstoffbeladung'' stabile Emulsionskonzentrate ergeben, so erhält man trotz Anwesenheit von Tensiden auf Aromatenbasis bei Erhöhung der Wirkstoffkonzentration keine stabilen Emulsionskonzentrate mehr, sondern instabile mehrphasige Systeme - wie anhand von Tabelle 1 (siehe weiter unten) deutlich wird (Beispiel 1). Daraus ergibt sich unmittelbar die Bedeutung der erfindungsgemäßen Lösungsmittelkomponente (ortho-Phosphor-säureester und/oder Phosphonsäureester) für die Stabilität der herzustellenden Emulsionskonzentrate.
Gleichwohl ist jedoch auch der aromatische Charakter der eingesetzten Tenside von Bedeutung. Dies wird aus den Beispielen 2 und 3 ersichtlich: Kommt anstelle eines Tensides auf Aromatenbasis ein (herkömmliches) aliphatisches Kohlenwasserstofftensid zum Einsatz, erhält man ebenfalls instabile Emulsionskonzentrate. Dies unterstreicht die Tatsache, daß die Tensidkomponente auf Aromatenbasis essentieller Bestandteil der beschriebenen Erfindung ist.

In Beispiel 4 ist die "Grenzkonzentration" von Ethofumesat überschritten, so daß es zur Kristallisation des Wirkstoffes kommt. Ersetzt man das in Rezeptur 4 als Lösungsmittel verwendete Tributylphosphat (TBP) durch Tributoxyethylphosphat (TBEP) erhält man dagegen ein stabiles Emulsionskonzentrat (Beispiel XVII). TBEP gestattet also eine höhere Beladung der Formulierung mit insbesondere Ethofumesat und übertrifft damit als TBP bezüglich der "Lösekraft". Unabhängig davon können im Einzelfall jedoch noch weitere Lösungsmittel erforderlich sein, um ein stabiles, kristallfreies Emulsionskonzentrat zu erhalten.

Ausgehend von diesen - keine stabilen Emulsionskonzentrate insbesondere der Wirkstoffe (a1), (a2) und/oder (a3) enthaltenden - Komponentenmischungen, war folglich nicht zu erwarten, daß mit dem erfindungsgemäßen Tensid/Lösungsmittelsystem stabile Emulsionskonzentrate für insbesondere die unter (a1 )-(a3) beschriebenen Wirkstoffe hergestellt werden können.

Überraschenderweise wurde nun gefunden, daß sich Kombinationen aus einem ortho-Phosphorsäure- und/oder einem Phosphonsäureester als Lösungsmittel und einem oder mehreren Tensiden auf Aromatenbasis besonders gut zur Herstellung stabiler Emulsionskonzentrate eignen. Dies wird anhand der in Tabelle 2 (siehe weiter unten) aufgelisteten Beispiele deutlich, die eine Vorstellung von der chemischen Flexibilität der offengelegten Komponentenmischung vermitteln. So eignen sich als Tenside auf Aromatenbasis insbesondere Alkoxylate des Triisobutylphenols, wobei der Ethoxylierungsgrad vorzugsweise 4-10 mol EO, insbesondere 6-8 mol EO pro Molekül betragen sollte (Beispiele I und VII) (EO=Ethylenoxy).

Ein für die Auswahl weiterer Tensidkomponenten kritischer Faktor ist deren "Acidität bzw. Basizität pro Gewichts- bzw. Volumeneinheit", die durch die Säure- bzw. Aminzahl ausgedrückt wird. Ein zu starker Anstieg der Gesamt-Säure- bzw. Aminzahl in der Fertigformulierung ist insofern problematisch als er eine Ausflockung/Kristallisation des/der formulierten Wirkstoffe nach sich zieht. Daher ist bei der Auswahl weiterer Tensidkomponenten darauf zu achten, daß die Gesamt-Säure- bzw. Aminzahl nicht zu stark ansteigt. Vorzugsweise eignen sich folglich neben nichtionogenen Tensiden nur saure bzw. basische Komponenten mit hinreichend kleiner Säure- bzw. Aminzahl. Da letztere wiederum mit dem Molekulargewicht korreliert, kommen als weitere Tensidkomponeten vielfach auch saure bzw. basische Derivate von Verbindungen mit hohem Molekulargewicht wie beispielsweise Tristyrylphenolalkoxylate in Frage (Beispiel XI). Im Falle nichtionogener Tenside sind diese Überlegungen - entsprechend dem nichtionogenen Charakter dieser Komponenten - hinfällig. Dementsprechend können als zusätzliche nichtionogene Tensidkomponenten - wie die Beispiele VIII, IX und X zeigen - neben mit 40 mol EO umgesetztem Rizinusöl insbesondere beispielsweise auch mit nur 12 mol EO umgesetztes Rizinusöl, mit 15 mol EO umgesetzte Ölsäure und EO-PO-EO-Blockcopolymere eingesetzt werden. Beispiel XII zeigt zudem, daß an die Stelle der ortho-Phosphorsäureester als Lösungsmittel auch Phosphonate treten können.
In diesem Zusammenhang ist weiterhin darauf hinzuweisen, daß die beschriebenen Tensid/Lösungsmittel-Systeme die Herstellung stabiler Emulsionskonzentrate mit in weiten Grenzen variabler Wirkstoffbeladung und -zusammensetzung ermöglichen (Beispiele I-VII): So kann die Wirkstoffbeladung beispielsweise zwischen 20 und 40, vorzugsweise zwischen 24 und 30 Gewichtsprozent variieren (Beispiele I-IV). Hinsichtlich der Wirkstoffzusammensetzung sind mit dieser Komponentenmischung neben stabilen "Ein-Wirkstoff-Emulsionskonzentraten" auch solche mit zwei oder insbesondere drei Wirkstoffen zugänglich - vorzugsweise vom Typ a1), a2) und/oder a3) (Beispiele II, V und VI).
Ferner zeigen die Beispiele XIII, XIV, XV und XVI, daß sich die beschriebenen Tensid/Lösungsmittelsysteme auch zur Herstellung von Emulsionskonzentraten mit anderen als den unter (a1)-(a3) explizit aufgeführten Wirkstoffen eignen. So lassen sich mit ihnen beispielsweise auch Emulsionskonzentrate herstellen, die die Wirkstoffe Diclofop-methyl, Fenoxaprop-ethyl, Prochloraz und/oder Deltamethrin enthalten.
Bevorzugte Gewichtsverhältnisse der Komponenten Ortho-Phosphorsäureester/Phosphonsäureester:Tensid auf Aromatenbasis sind je nach Wirkstoffbeladung und -Zusammensetzung der Emulsionskonzentrate 100:1 bis 1:100, besonders bevorzugt 20:1 bis 1:20, weiter bevorzugt 5:1 bis 1:2, beispielsweise 1,5:1 bis 1,3:1.

Emulgierbare Konzentrate, die entsprechend der vorliegenden Erfindung hergestellt werden, enthalten a priori kein zusätzliches Wasser, sondern nur das in den genannten kommerziell erhältlichen Tensiden bzw. Tensidmischungen, Polymeren und Lösungsmitteln vorhandene Restwasser. Aufgrund der in den Formulierungen enthaltenen Tenside ist es jedoch möglich, die genannten Formulierungen bis hin zu einem kritischen Volumenbruch mit Wasser zu verdünnen, ohne daß es zu einer Eintrübung bzw. Instabilisierung der Formulierung kommt. Dabei entstehen formal zunächst W/O-Mikroemulsionen, die bei weiterer Erhöhung des Wasseranteiles in W/O-Emulsionen und schließlich - bei weiterer Verdünnung mit Wasser - in O/W-Emulsionen übergehen. Die Erfindung umfaßt daher auch neben der erfindungsgemäßen Tensid-/Lösungsmittelmischung b) (zusätzliches) Wasser enthaltende flüssige Formulierungen von insbesondere einem oder mehreren Wirkstoffen vom Typ (a1), (a2) und/oder (a3).

Mit Hilfe der Komponentenmischungen (b) lassen sich vorzugsweise flüssige Formulierungen z.B. auch Emulsionskonzentrate, insbesondere Zubereitungen von Des- und/oder Phenmedipham und/oder Ethofumesate herstellen, gekennzeichnet durch einen Gehalt an
a) 1 bis 50 Gew.-%, vorzugsweise 15 bis 35 Gew.-% pestizider Wirkstoffe,
b) 5 bis 80 Gew.-%, vorzugsweise 10 bis 70 Gew.-% des erfindungsgemäßen Tensid-/Lösungsmitte)systems (b),
c) 0 bis 40 Gew.-%, vorzugsweise 5 bis 35 Gew.-% weitere organische Lösungsmittel,
d) 0 bis 30 Gew.-%, vorzugsweise 10 bis 25 Gew.-% weitere Tenside,
e) 0 bis 20 Gew.-%, vorzugsweise 0 bis 10 Gew.-% übliche Formulierungshilfsmittel und
f) 0 bis 96 Gew.-%, vorzugsweise 0 bis 90 Gew.-%, insbesondere 0 bis 10 Gew.-% Wasser.

Weitgehend wasserfreie Emulsionskonzentrate stellen eine günstige Anwendungsform der herbiziden Wirkstoffe vom Typ (a) dar und sind ein bevorzugter Gegenstand der Erfindung. Besonders bevorzugt sind Emulsionskonzentrate mit einem Gehalt an
a) 10 bis 40 Gew.-% Wirkstoff vom genannten Typ (a), vorzugsweise (a1), (a2) und/oder (a3),
b) 10 bis 60 Gew.-% des erfindungsgemäßen Tensid-/lösungsmittelsystems (b),
c) 5 bis 35 Gew.-% weitere organische Lösungsmittel,
d) 10 bis 25 Gew.-% weitere Tenside und
e) 0 bis 10 Gew.-% übliche Formulierungshilfsmittel.

Übliche Formulierungshilfsmittel e) sind beispielsweise Frostschutzmittel, Verdunstungshemmer, Kanservierungsmittel, Riechstoffe, Farbstoffe u. a.; bevorzugte Formulierungshilfsmittel e) sind
◆ Frostschutzmittel und Verdunstungshemmer wie Glycerin, z.B. in einer Menge von 2 bis 10 Gew.-% und
◆ Konservierungsstoffe, z.B. Mergal K9N® (Riedel) oder Cobate C®, in den üblichen Anwendungskonzentrationen für die jeweils speziell eingesetzten Mittel.

Die mit dem erfindungsgemäßen Tensid/Lösungsmittel-System hergestellten Formulierungen und Spritzbrühen weisen bei der Anwendung auch biologisch vorteilhafte Resultate auf. So wird beobachtet, daß die biologische Aktivität der eingesetzten pestiziden Wirkstoffe durch den Einsatz der erfindungsgemäßen Komponente (b) in synergistischer Weise gesteigert werden kann.

In den folgenden Beispielen beziehen sich Mengenangaben auf das Gewicht, sofern nichts anderes angegeben ist. Die Beispiele der Tabelle 1 betreffen nicht erfindungsgemäße Vergleichsbeispiele, die der Tabelle 2 erfindungsgemäße.

**Tabelle 1:**

| Beispiele für Formulierungen, die keine stabilen Emulsionskonzentrate (EC) ergeben | | | | |
|---|---|---|---|---|
| | 1 | 2 | 3 | 4 |
| Desmedipham (a1) | 8 | 2,75 | 2,75 | |
| Phenmedipham (a2) | 10 | 8,25 | 8,25 | |
| Ethofumesat (a3) | 12,5 | 16,5 | 16,5 | 37,25 |
| Rapsöl | 18 | | | |
| C₇H₁₅/C₉H₁₉-CON(CH₃)₂¹⁾ | 23 | | | |
| [C₄H₉-O]₃-PO²⁾ | | | | 21,55 |
| [C₄H₉-O-(EO)]₃-PO³⁾ | | 28,5 | 28,5 | |
| N-Methylpyrrolidon (NMP) | 8,5 | | | |
| [NP-O-(EO)₆-]ₙ-PO₄₋ₙH₃₋ₙ⁴⁾ | 2 | | | |
| [(s-C₄H₉)₃-C₆H₂]-O-(EO)₆-H⁵⁾ | 18 | | | 18,6 |
| C_{12/14}-O-(EO)₂₃⁶⁾ | | 20 | 20 | |
| Rizinusöl+40 mol EO⁷) | | 18 | | 16,7 |
| EO-PO-EO-Blockcop., 80% EO⁸⁾ | | | 18 | |
| [C₆H₅-O-(EO)₄]ₙ-PO₄₋ₙH₃₋ₙ⁹⁾ | | 4 | 4 | 3,9 |
| [i-C₁₃-O-(EO)₂₀-]ₙ-PO₄₋ₙH₃₋ₙ¹⁰⁾ | | 2 | 2 | |

Abkürzungen und Fußnoten in Tabelle 1: Siehe nach Tabelle 2

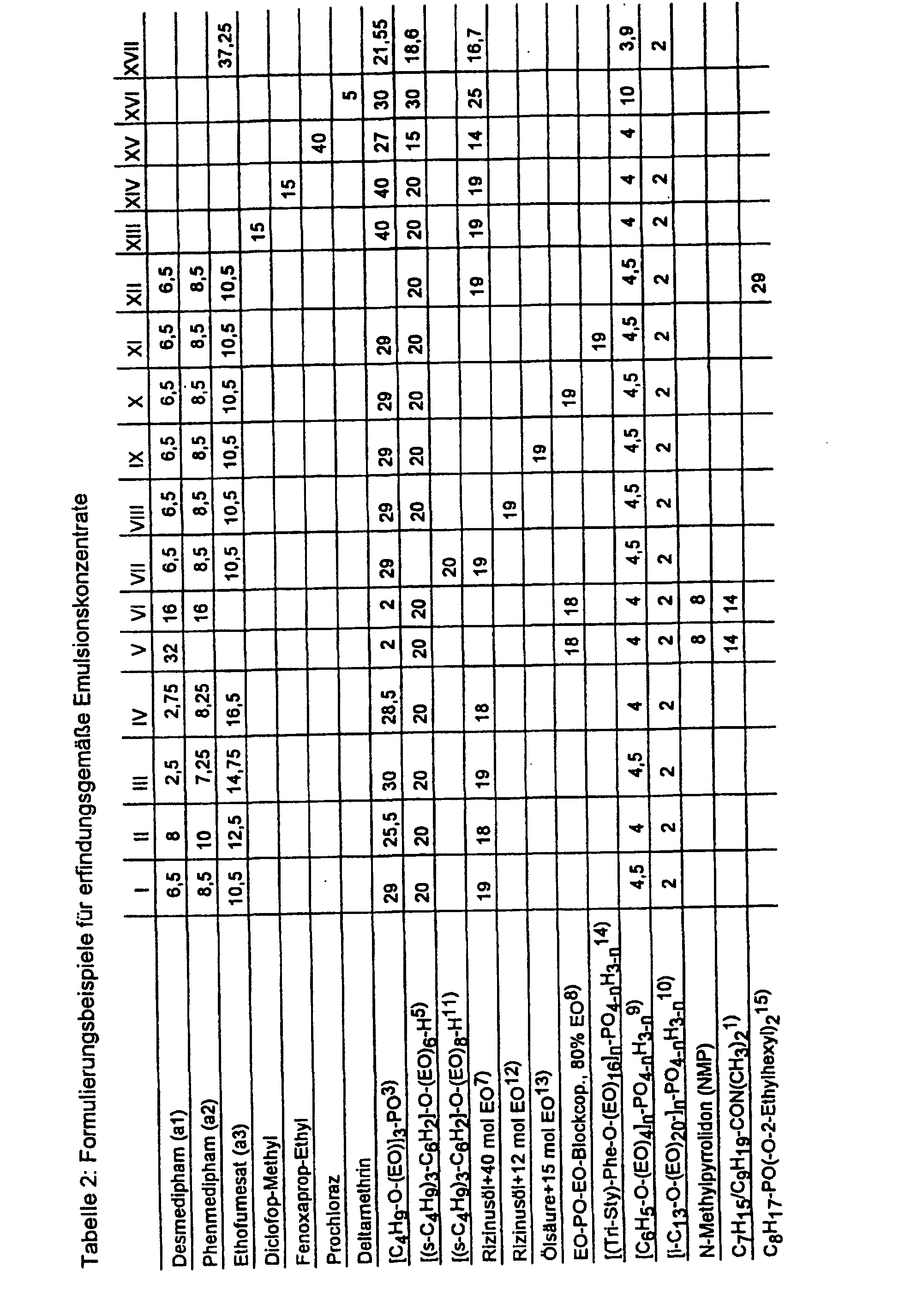

Abkürzungen und Fußnoten zu Tabellen 1 und 2:
- n: In den Formeln gilt n=0-3, d. h. es handelt sich jeweils um ein Gemisch der Phosphorester mit n=1, 2 und 3, wobei die sauren Anteile mit n = 1 und 2 wesentlich sind;
- Zahlen: Alle Angaben sind Anteile in Gewichtsprozent bezogen auf das Gewicht der Formulierung (= 100 Gewichtsprozent);
- i-C₁₃- =: lsotridecyl
- EO =: "Ethylenoxid", d.h. eine Gruppe der Formel -CH₂-CH₂-O- (Ethylenoxy) oder, falls endständig, -CH₂-CH₂O-H (Hydroxyethyl)
- PO =: "Propylenoxid", d.h. eine Gruppe der Formel -C₃H₆-O- (Propylenoxy)
- (Tri-Sty-)Phe- =: Tristyrylphenyl-
- NP- =: Nonylphenyl

Fußnoten zu Tabellen 1 und 2 (Erläuterungen zu Indexzahlen):
1) Capryl-/Caprin-Fettsäuredimethylamid (speziell Genagen 4166®, Clariant, bzw. Hallcomid M 8-10®, Hall Chemicals)
2) Tributylphosphat (speziell Entschäumer T®, Bayer)
3) Tributoxyethylphosphat (speziell Hostaphat B310®, Clariant)
4) phosphatiertes Nonylphenolalkoxylat (speziell Emcol CS 136®, Witco)
5) Ethoxyliertes Tri-(sec.-butyi)-phenol (speziell Sapogenat T-060®, Clariant)
6) Ethoxylierter C_{12/14}-Fettalkohol (speziell Brij 35®, ICI)
7) Ethoxyliertes Rizinusöl (speziell Emulsogen EL 400®, Clariant)
8) Ethylenoxid-Propylenoxid-Ethylenoxid-Blockcopolymer (speziell Genapol PF 80®, Clariant)
9) phosphatiertes ethoxyliertes Phenol mit folgenden Anteilen im Gemisch: 7,5-8,5 Gew.-% n=0, 1-10 Gew.-% C₆H₅-O-(EO)₄H, 80-90 Gew.-% n=1 und ca. 2 Gew.-% n=2
10) phosphatierter ethoxylierter Isotridecylalkohol (speziell Servoxyl VPDZ 20/100®, Servo)
11) Ethoxyliertes Tri-(sec.-butyl)-phenol (speziell Sapogenat T-080®, Clariant)
12) Ethoxyliertes Rizinusöl (speziell Etocas 12®, Croda)
13) Ethoxylierte Ölsäure (speziell Serdox NOG-600®, Servo)
14) phosphatiertes Tristyrylphenolalkoxylat (speziell Soprophor 3D33®, Rhodia)
15) Diester der Octanphosphonsäure (speziell Hostarex PO 224®, Clariant)

## Patentansprüche

1. Tensid/Lösungsmittel-System für flüssige organische Formulierungen, **dadurch gekennzeichnet, daß** es
b1) ein oder mehrere Tenside auf Aromatenbasis und
b2) einen oder mehrere vollständig verestere organische Phosphate und/oder Phosphonate als Lösungsmittel, ausgewählt aus der Gruppe bestehend aus
b2.1) Estern der Phosphorsäure mit Alkoholen aus der Gruppe bestehend aus
- einwertigen Alkanolen mit 5 bis 22 C-Atomen,
- Diolen oder Polyolen,
- Aryl-, Alkylaryl-, Poly(alkyl)aryl- oder Poly(arylalkyl)arylalkoholen,
- alkoxylierten Alkoholen, die durch Umsetzung der vorstehend genannten Alkohole mit Alkylenoxiden erhalten werden, oder
- alkoxylierten Alkoholen, die durch Umsetzung einwertiger Alkanole mit 1 bis 4 C-Atomen und Alkylenoxiden erhalten werden, und
b2.2) Phosphonaten auf Basis von zweifach mit Alkoholen und/oder alkoxylierten Alkoholen veresterten Alkyl-, Aryl-, Alkylaryl-, Poly(alkyl)-aryl- oder Poly(arylalkyl)-aryl-Phosphonsäuren mit Alkoholen aus der Gruppe
- einwertige Alkanole mit 1 bis 22 C-Atomen,
- Diole oder Polyole,
- Aryl-, Alkylaryl-, Poly(alkyl)aryl- und Poly(arylalkyl)arylalkoholen oder
- alkoxylierte Alkoholen, die durch Umsetzung der vorstehend genannten Alkohole mit Alkylenoxiden erhalten werden,
wobei die drei Alkoholkomponenten des Phosphorsäureesters (b2.1) oder die zwei Alkoholkomponenten des Phosphonats (b2.2) gleich oder verschieden sein können und so ausgewählt sind, dass der Ester ein polares Lösungsmittel ist, das bei 20°C wasserunlöslich oder bis zu 5 g/l in Wasser löslich ist und in wäßriger Lösung keine mizellaren Aggregate ausbildet,
enthält.

2. Tensid/Lösungsmittel-System nach Anspruch 1, **dadurch gekennzeichnet, daß** es ein oder mehrere Tenside auf Aromatenbasis aus der Gruppe
b1.1) Phenole, Phenyl-(C₁-C₄)alkyl-ether oder (poly)alkoxylierte Phenole,
b1.2) (Poly)alkylphenole oder (Poly)alkylphenolalkoxylate,
b1.3) Polyarylphenole oder Polyarylphenolalkoxylate,
b1.4) Verbindungen, die formal die Umsetzungsprodukte der unter b1.1) bis b1.3) beschriebenen Moleküle mit Schwefelsäure oder Phosphorsäure darstellen und deren mit Basen neutralisierte Salze und
b1.5) saure und mit Basen neutralisierte (Poly)alkyl- und (Poly)aryl-benzolsulfonate enthält.

3. Tensid/Lösungsmittel-System nach Anspruch 1 oder 2, **dadurch gekennzeichnet, daß** es ein oder mehrere Tenside auf Aromatenbasis aus der Gruppe
- mit 4 bis 10 mol Ethylenoxid umgesetztes Phenol,
- mit 4 bis 50 mol Ethylenoxid umgesetztes Triisobutylphenol,
- mit 4 bis 50 mol Ethylenoxid umgesetztes Nonylphenol,
- mit 4 bis 150 mol Ethylenoxid umgesetztes Tristyrylphenol und
- saures (lineares) Dodecylbenzolsulfonat
enthält.

4. Tensid/Lösungsmittel-System nach einem der Anprüche 1 bis 3, **dadurch gekennzeichnet, daß** es als Lösungsmittel ein oder mehrere Verbindungen aus der Gruppe
- mit alkoxylierten kurzkettigen Alkoholen mit 1 bis 22 C-Atomen im Alkylrest und 1 bis 30 Alkylenenoxy-einheiten im Polyalkylenoxy-teil dreifach veresterte ortho-Phosphorsäure,
- mit Alkylalkoholen mit 5 bis 22 C-Atomen dreifach veresterte ortho-Phosphorsäure,
- mit gegebenenfalls alkoxylierten Alkoholen mit 1 bis 22 C-Atomen im Alkylrest oder gegebenenfalls alkoxylierten Phenolderivaten, jeweils mit 0 bis 30 Alkylenoxy-einheiten im Polyalkylenoxy-teil, teilweise veresterte ortho-Phosphorsäure, wobei die verbleibenden OH-Vatenzen der ortho-Phosphorsäure nachfolgend alkoxyliert wurden, und
- formal zweifach mit Alkoholen umgesetzte Ester der n-Octylphosphonsäure, enthält.

5. Tensid/Lösungsmittel-System nach einem der Anprüche 1 bis 4, **dadurch gekennzeichnet, daß** es als Lösungsmittel Tri(butoxyethyl)phosphat enthält.

6. Flüssige Formulierung, welche
(a) einen oder mehrere in Wasser unlösliche Wirkstoffe,
(b) das erfindungsgemäße Tensid/Lösungsmittel-System (= Komponentenmischung (b)) gemäß einem der Ansprüche 1 bis 5,
(c) gegebenenfalls weitere organische Lösungsmittel,
(d) gegebenenfalls weitere Tenside und/oder Polymere und
(e) gegebenenfalls Wasser
enthält.

7. Flüssige Formulierung nach Anspruch 6, welche
a) 1 bis 50 Gew.-% pestizider Wirkstoffe,
b) 5 bis 80 Gew.-% des erfindungsgemäßen Tensid-/Lösungsmittelsystems (b),
c) 0 bis 40 Gew.-% weitere organische Lösungsmittel,
d) 0 bis 30 Gew.-% weitere Tenside,
e) 0 bis 20 Gew.-% übliche Formulierungshilfsmittel und
f) 0 bis 96 Gew.-% Wasser enthält.

8. Emulsionskonzentrat, **dadurch gekennzeichnet, daß** es
a) 10 bis 40 Gew.-% eines oder mehrerer in Wasser unlöslicher Wirkstoffe,
b) 10 bis 60 Gew.-% des erfindungsgemäßen Tensid-/Lösungsmittelsystems (b) gemäß einem der Ansprüche 1 bis 5,
c) 5 bis 35 Gew.-% weitere organische Lösungsmittel,
d) 10 bis 25 Gew.-% weitere Tenside und
e) 0 bis 10 Gew.-% übliche Formulierungshilfsmittel enthält.

9. Formulierung gemäß einem der Ansprüche 6 bis 8, **dadurch gekennzeichnet, daß** sie einen oder mehrere Wirkstoffe aus der Gruppe der Herbizide Desmedipham, Phenmedipham und Ethofumesat enthält.

10. Verfahren zur Herstellung einer gemäß einem der Ansprüche 6 bis 8 definierten Formulierung, **dadurch gekennzeichnet, daß** man die Komponenten miteinander vermischt.

11. Verfahren zur Bekämpfung von unerwünschtem Pflanzenwuchs, **dadurch gekennzeichnet, daß** man eine wirksame Menge einer Formulierung gemäß einem der Ansprüche 6 bis 9, die einen herbiziden Wirkstoff enthält, falls erforderlich nach Verdünnen mit Wasser, auf die Pflanzen, Pflanzenteile oder die Anbaufläche appliziert.

12. Verwendung des Tensid-/Lösungsmittelsystems nach Anspruch 1 in flüssigen Zubereitungen von Wirkstoffen.

13. Verwendung gemäß Anspruch 12 in Emulsionskonzentraten (EC).

## Claims

1. A surfactant/solvent system for liquid organic formulations,
**characterized in that** it comprises
b1) one or more aromatic-based surfactants and
b2) one or more completely esterified organic phosphates and/or phosphonates as solvent, selected from the group consisting of
b2.1) esters of phosphoric acid with alcohols selected from the group consisting of
- monohydric alkanols having 5 to 22 carbon atoms,
- diols or polyols,
- aryl, alkylaryl, poly(alkyl)aryl or poly(arylalkyl)aryl alcohols,
- alkoxylated alcohols obtained by reacting the abovementioned alcohols with alkylene oxides, or
- alkoxylated alcohols obtained by reacting monohydric alkanols with 1 to 4 carbon atoms and alkylene oxides, and
b2.2) phosphonates based on alkyl-, aryl-, alkylaryl-, poly(alkyl)aryl- or poly(arylalkyl)arylphosphonic acids diesterified with alcohols and/or alkoxylated alcohols, with alcohols from the group
- monohydric alkanols having 1 to 22 carbon atoms,
- diols or polyols,
- aryl, alkylaryl, poly(alkyl)aryl and poly(arylalkyl)aryl alcohols or
- alkoxylated alcohols obtained by reacting the abovementioned alcohols with alkylene oxides,
where the three alcohol components of the phosphoric ester (b2.1) or the two alcohol components of the phosphonate (b2.2) can be identical or different and are chosen such that the ester is a polar solvent which is water-insoluble or soluble in water to 5 g/l at 20°C and, in aqueous solution, does not form micellar aggregates.

2. The surfactant/solvent system as claimed in claim 1, **characterized in that** it comprises one or more aromatic-based surfactants from the group
b1.1) phenols, phenyl (C₁-C₄)alkyl ethers or (poly)alkoxylated phenols,
b1.2) (poly)alkylphenols or (poly)alkylphenol alkoxylates,
b1.3) polyarylphenols or polyarylphenol alkoxylates,
b1.4) compounds which formally represent the reaction products of the molecules described under b1.1) to b1.3) with sulfuric acid or phosphoric acid, and their salts neutralized with bases,
b1.5) (poly)alkyl- and (poly)arylbenzenesulfonates which are acidic and have been neutralized with bases.

3. The surfactant/solvent system as claimed in claim 1 or 2, **characterized in that** it comprises one or more aromatic-based surfactants from the group
- phenol reacted with 4 to 10 mol of ethylene oxide,
- triisobutylphenol reacted with 4 to 50 mol of ethylene oxide,
- nonylphenol reacted with 4 to 50 mol of ethylene oxide,
- tristyrylphenol reacted with 4 to 150 mol of ethylene oxide and
- acidic (linear) dodecylbenzenesulfonate.

4. The surfactant/solvent system as claimed in any of claims 1 to 3, **characterized in that** it comprises, as solvent, one or more compounds from the group
- orthophosphoric acid triesterified with alkoxylated short-chain alcohols having 1 to 22 carbon atoms in the alkyl radical and 1 to 30 alkyleneoxy units in the polyalkyleneoxy moiety,
- orthophosphoric acid triesterified with alkyl alcohols having 5 to 22 carbon atoms,
- orthophosphoric acid partially esterified with optionally alkoxylated alcohols having 1 to 22 carbon atoms in the alkyl radical or optionally alkoxylated phenol derivatives, in each case having 0 to 30 alkyleneoxy units in the polyalkyleneoxy moiety, the remaining OH valences of the orthophosphoric acid having been subsequently alkoxylated, and
- esters of n-octylphosphonic acid which have been formally reacted twice with alcohols.

5. The surfactant/solvent system as claimed in any of claims 1 to 4, **characterized in that** it comprises tri(butoxyethyl)phosphate as solvent.

6. A liquid formulation which comprises
(a) one or more water insoluble active ingredients,
(b) the surfactant/solvent system according to the invention (= component mixture (b)) as claimed in any of claims 1 to 5,
(c) optionally further organic solvents,
(d) optionally further surfactants and/or polymers and
(e) optionally water.

7. The liquid formulation as claimed in claim 6, which comprises
a) 1 to 50% by weight of pesticide active ingredients,
b) 5 to 80% by weight of the surfactant/solvent system (b) according to the invention,
c) 0 to 40% by weight of further organic solvents,
d) 0 to 30% by weight of further surfactants,
e) 0 to 20% by weight of customary formulation auxiliaries and
f) 0 to 96% by weight of water.

8. An emulsion concentrate, **characterized in that** it comprises
a) 10 to 40% by weight of one or more water-insoluble active ingredients,
b) 10 to 60% by weight of the surfactant/solvent system (b) according to the invention, as claimed in any of claims 1 to 5,
c) 5 to 35% by weight of further organic solvents,
d) 10 to 25% by weight of further surfactants and
e) 0 to 10% by weight of customary formulation auxiliaries.

9. The formulation as claimed in any of claims 6 to 8, **characterized in that** it comprises one or more active ingredients from the group of the herbicides desmedipham, phenmedipham and ethofumesate.

10. A process for the preparation of a formulation defined as claimed in any of claims 6 to 8, **characterized in that** the components are mixed with one another.

11. A method of controlling undesired plant growth, **characterized in that** an effective amount of a formulation as claimed in any of claims 6 to 9, which comprises a herbicidal active ingredient, is applied, if necessary following dilution with water, to the plants, plant parts or area where the plants grow.

12. The use of the surfactant/solvent system as claimed in claim 1 in liquid preparations of active ingredients.

13. The use as claimed in claim 12 in emulsion concentrates (EC).

## Revendications

1. Système agent de surface/solvant pour formulations organiques liquides, **caractérisé en ce qu'**il est choisi parmi
b1) un ou plusieurs agents de surface à base d'aromatiques et
b2) un ou plusieurs phosphates et/ou phosphonates organiques complètement estérifiés en tant que solvants, pris dans le groupe comprenant
b2.1) des esters de l'acide phosphorique avec des alcools pris dans le groupe comprenant
- des alcanols monovalents présentant 5 à 22 atomes de carbone,
- des diols ou polyols,
- des aryl-, alkylaryl-, poly(alkyl)-aryl- ou poly(arylalkyl)arylalcools,
- des alcoools alkoxylés obtenus par réaction des alcools précités sur les oxydes d'alkylènes, ou des alcools alkoxylés obtenus par réaction d'alcanols monovalents présentant 1 à 4 atomes de carbone et des oxydes d'alkylènes, et
b2.2) des phosphonates à base d'acides alkyl-, aryl-, alkylaryl-, poly(alkyl)-aryl- ou poly(arylalkyl)aryl-phosphoniques deux fois estérifiés par des alcools et/ou alcools alkoxylés, par des alcools pris dans le groupe comprenant
- des alcanols monovalents présentant 1 à 22 atomes de carbone,
- des diols ou polyols,
- des aryl-, alkylaryl-, poly(alkyl)-aryl- ou poly(arylalkyl)arylalcools, ou
- des alcohols alkoxylés, obtenus par réaction des alcools précités sur les oxydes d'alkylènes
les trois composants alcool de l'ester de l'acide phosphorique (b2.1) ou les deux composants alcool du phosphonate (b2.2) peuvent être identiques ou différents et sont choisis de façon telle que l'ester soit un solvant polaire, qui est insoluble dans l'eau à 20°C ou est hydrosoluble jusqu'à 5 g/l et ne forme pas d'agrégats micellaires dans un solvant aqueux.

2. Système agent de surface/solvant selon la revendication 1, **caractérisé en ce qu'**il renferme un ou plusieurs agents de surface à base d'aromatiques pris dans le groupe comprenant
b1.1) des phénols, des éthers phénylalkyliques en C₁-C₄ ou des phénols (poly)alkoxylés,
b1.2) des (poly)alkylphénols ou des alkoxylates de (poly)alkylphénol,
b1.3) des polyarylphénols ou des alkoxylates de (poly)arylphénol,
b1.4) des composés qui représentent de par la formule les produits de réaction des molécules décrites aux points b1.1) à b1.3) avec l'acide sulfurique ou l'acide phosphorique et leurs sels neutralisés par des bases et
b1.5) des (poly)alkyl- et (poly)aryl-benzènesulfonates acides et neutralisés par des bases.

3. Système agent de surface/solvant selon la revendication 1 ou 2, **caractérisé en ce qu'**il renferme un ou plusieurs agents de surface à base d'aromatiques pris dans le groupe
- phénol transformé par 4 à 10 moles d'oxyde d'éthylène,
- triisobutylphénol transformé par 4 à 50 moles d'oxyde d'éthylène,
- nonylphénol transformé par 4 à 50 moles d'oxyde d'éthylène,
- tristyrylphénol transformé par 4 à 150 moles d'oxyde d'éthylène, et
- dodécylbenzènsulfonate acide (linéaire).

4. Système agent de surface/solvant selon l'une des revendications 1 à 3, **caractérisé en ce qu'**il renferme en tant que solvant un ou plusieurs composés pris dans le groupe comprenant
- l'acide ortho-phosphorique estérifié trois fois dans le reste alkyle par des alcools alkoxylés à chaîne courte présentant 1 à 22 atomes de carbone et dans le fragment polyoxyalkylène par 1 à 30 unités oxyalkylène,
- l'acide ortho-phosphorique estérifié trois fois par des alcools alkylés présentant 5 à 22 atomes de carbone,
- l'acide ortho-phosphorique partiellement estérifié par des alcools éventuellement alkoxylés présentant 1 à 22 atomes de carbone dans le reste alkyle ou des dérivés du phénol éventuellement alkoxylés présentant 0 à 30 unités oxyalkylène dans le fragment polyoxyalkylène, les valences OH restantes de l'acide ortho-phosphorique sont ensuite alkoxylées, et
- des esters de l'acide n-octylphosphonique deux fois transformés de par la formule par des alcools.

5. Système agent de surface/solvant selon l'une des revendications 1 à 4, **caractérisé en ce qu'**il renferme en tant que solvant le phosphate de tri(butoxyéthyle).

6. Formulation liquide, qui renferme
(a) une ou plusieurs substances actives insolubles dans l'eau,
(b) le système agent de surface/solvant conforme à l'invention (= mélange de composants (b)) selon une ou plusieurs des revendications 1 à 5,
(c) éventuellement d'autres solvants organiques,
(d) éventuellement d'autres agents de surface et/ou polymères et
(e) éventuellement de l'eau.

7. Formulation liquide selon la revendication 6, qui renferme
(a) de 1 à 50 % en masse de substance active pesticide,
(b) de 5 à 80 % en masse du sytème agent de surface/solvant conforme à l'invention (b),
(c) de 0 à 40 % en masse d'autres solvants organiques,
(d) de 0 à 30 % en masse d'autres agents de surface,
(e) de 0 à 20 % en masse d'adjuvants de formulation usuels et
(f) de 0 à 96 % en masse d'eau.

8. Concentré émulsionnable, **caractérisé en ce qu'**il renferme
(a) de 10 à 40 % en masse d'une ou plusieurs substances actives insolubles dans l'eau,
(b) de 10 à 60 % en masse du système agent de surface/solvant (b) selon l'une des revendications 1 à 5,
(c) de 5 à 35 % en masse d'autres solvants organiques,
(d) de 10 à 25 % en masse d'autres agents de surface,
(e) de 0 à 10 % en masse d'adjuvants de formulation usuels.

9. Formulation selon l'une des revendications 6 à 8, **caractérisé en ce qu'**elle renferme une ou plusieurs substances actives prises dans le groupe des herbicides dismédipham, phemédipham et éthofumésate.

10. Procédé pour la préparation d'une formulation définie selon l'une des revendications 6 à 8, **caractérisé en ce qu'**on réunit par mélange les composants.

11. Procédé pour la lutte contre la végétation indésirable, **caractérisé en ce qu'**on applique une quantité efficace d'une formulation selon l'une des revendications 6 à 9, qui renferme une substance active herbicide, si nécessaire après dilution par l'eau, aux plantes, aux parties de plantes ou à la surface cultivable.

12. Utilisation du système d'agent de surface/solvant selon la revendication 1 dans des préparations liquides de substances actives.

13. Utilisation selon la revendication 12 dans des concentrés émulsionnables (EC).
